# EUROPEAN PATENT APPLICATION

(11) **EP 4 782 411 A1**
(43) Date of publication of application: **29.07.2026**
(21) Application number: 24868153.8
(22) Date of filing: 06.09.2024
(51) Int. Cl.: C03B 5/04, C03B 5/42

(54) **MELTING FURNACE AND METHOD FOR MANUFACTURING GLASS ARTICLE**

(30) Priority: 21.09.2023 JP 2023155821
(71) Applicant: Nippon Electric Glass Co., Ltd., Otsu-shi, Shiga 520-8639 (JP)
(72) Inventor: TENYAMA, Kazuyuki, Otsu-shi, Shiga 520-8639 (JP)
(74) Representative: Tetzner, Michael
(86) International application number: PCT/JP2024/032077
(87) International publication number: WO 2025/063075

(57) **Abstract**

Provided is a melting furnace (1), which is configured to generate molten glass (Gm) by heating and melting a glass raw material, the melting furnace (1) including: an arched ceiling wall (3c); a ceiling bearing brick (3d) configured to support an end surface (3ca) of the ceiling wall (3c); a holder (5) configured to hold the ceiling bearing brick (3d); and a support column (4) configured to support the holder (5).

## Description

### Technical Field

The present invention relates to a melting furnace and a method of manufacturing a glass article using the same.

### Background Art

As is well known, glass articles, which are typified by glass sheets, glass tubes, glass fibers, and the like, are manufactured by heating and melting a glass raw material in a melting furnace to generate molten glass, and then forming the molten glass into a predetermined shape.

A melting furnace broadly includes a melting tank that generates and stores molten glass, and an upper structure that covers an upper space above the melting tank.

As an example of the upper structure of the melting furnace, as disclosed in, for example, Patent Literature 1, an arched ceiling wall is provided in some cases.

Further, Patent Literature 1 discloses that end portions (both end portions) of an arched ceiling wall (1a) are held by L-shaped holders (8) mounted on support columns (3a) (see FIG. 1 of Patent Literature 1).

Further, Patent Literature 1 discloses that those holders (8) are each made of a material such as steel SS400 (see paragraph 0039 of Patent Literature 1).

### Citation List

Patent Literature: JP 2008-1538 A

### Summary of Invention

### Technical Problem

Incidentally, as disclosed in Patent Literature 1, when the end portions of the arched ceiling wall formed of refractory members such as refractory bricks are directly held by holders made of metal such as steel, the end portions of the ceiling wall are prone to damage. Consequently, there arises a problem in that the ceiling wall cannot be stably supported over a long period of time.

From the above-mentioned viewpoint, the present invention has a technical object to stably support an arched ceiling wall over a long period of time.

### Solution to Problem

(1) According to a first aspect of the present invention, which has been devised to achieve the above-mentioned object, there is provided a melting furnace, which is configured to generate molten glass by heating and melting a glass raw material, the melting furnace comprising: an arched ceiling wall; a ceiling bearing brick configured to support an end surface of the ceiling wall; a holder configured to hold the ceiling bearing brick; and a support column configured to support the holder.

According to such a configuration, the end surface of the arched ceiling wall is supported by the ceiling bearing brick, and the ceiling bearing brick is held by the holder supported on the support column. Thus, an end portion of the ceiling wall is less prone to damage. Consequently, the arched ceiling wall can be stably supported over a long period of time.

(2) In the configuration of the above-mentioned item (1), the holder may comprise: a lower support portion configured to support the ceiling bearing brick from below; and a lateral support portion configured to support the ceiling bearing brick laterally, the end surface of the ceiling wall may be held in abutment against a bearing surface of the ceiling bearing brick, and an abutment surface of the end surface, which is held in abutment against the bearing surface, may be formed as an inclined surface with the same angle of inclination as an angle of inclination of the bearing surface, and the holder may be configured so as to bear a force that causes the ceiling bearing brick to rotate downward about a corner portion of the ceiling bearing brick corresponding to a corner portion between the lower support portion and the lateral support portion.

With such a configuration, even when a wall portion arranged below the ceiling bearing brick is removed during, for example, repair or inspection of the melting furnace, the ceiling bearing brick does not rotate downward about the above-mentioned corner portion. Accordingly, at the time of removing the wall portion described above, when the holder is configured to be fixed to the support column as described later, the ceiling wall remains supported by the ceiling bearing brick and the holder. Thus, collapse of the ceiling wall is prevented. As a result, at the time of restarting the melting furnace after, for example, repair or inspection of the melting furnace, the ceiling wall can be reused as it is.

(3) In the configuration of the above-mentioned item (1), the holder may be supported on the support column so as to be vertically movable.

With such a configuration, even when the wall portion arranged below the ceiling bearing brick expands or contracts vertically due to a thermal influence, the holder moves vertically in response thereto, thereby being capable of always holding the ceiling bearing brick appropriately.

(4) In the configuration of any one of the above-mentioned items (1) to (3), the holder may be supported on the support column so as to be vertically movable at least during operation of the melting furnace, and may be fixed to the support column at the time when a wall portion arranged below the ceiling bearing brick is removed.

With such a configuration, the holder can hold the ceiling wall appropriately both during operation of the melting furnace and at the time of removing the above-mentioned wall portion.

(5) In the configuration of any one of the above-mentioned items (1) to (4), the ceiling bearing brick may comprise: a first brick on the ceiling wall side; and a second brick on the holder side, and the first brick may be exposed to an inside of the melting furnace and the second brick may be unexposed to the inside of the melting furnace.

With such a configuration, the second brick is less susceptible to a thermal influence from the inside of the melting furnace, and heat conduction from the ceiling bearing brick to the holder and the support column is suppressed. Thus, holding of the ceiling bearing brick by the support column and the holder can be maintained appropriately over a long period of time.

(6) In the configuration of the above-mentioned item (5), the first brick may be superior in at least one of heat resistance and corrosion resistance to the second brick.

Such a configuration can suppress premature deterioration of the first brick that directly supports the ceiling wall, thereby being capable of supporting the ceiling wall appropriately over a long period of time.

(7) In the configuration of the above-mentioned item (5) or (6), the second brick may be superior in thermal insulation to the first brick.

With such a configuration, heat in the melting furnace is less liable to escape to the outside, thereby being capable of improving energy efficiency during operation of the melting furnace.

(8) In the configuration of any one of the above-mentioned items (5) to (7), respective abutment surfaces of the first brick and the second brick may be held in abutment against each other using an anti-slip structure.

Such a configuration can prevent collapse due to slippage of the first brick from the second brick and consequent collapse of the ceiling wall.

(9) In the configuration of any one of the above-mentioned items (1) to (8), the ceiling bearing brick may comprise a protruding portion protruding toward the support column side.

Such a configuration allows the protruding portion to be effectively utilized for supporting the ceiling bearing brick via the holder on the support column.

(10) In the configuration of the above-mentioned item (9), the holder may comprise a recessed portion configured to receive the protruding portion.

Such a configuration can shorten the vertical dimension of the holder to achieve reductions in weight and size, and allows the holder to move reliably in response to vertical movement of the ceiling bearing brick.

(11) According to a second aspect of the present invention, which has been devised to achieve the above-mentioned object, there is provided a method of manufacturing a glass article, the method comprising a step of generating molten glass using the melting furnace having the configuration of any one of the above-mentioned items (1) to (10).

This manufacturing method can also achieve substantially the same operations and effects as those of the melting furnace having the configuration of any one of the above-mentioned items (1) to (10).

### Advantageous Effects of Invention

According to the present invention, it is possible to stably support the arched ceiling wall over a long period of time.

### Brief Description of Drawings

FIG. 1 is a longitudinal sectional side view for illustrating an overall configuration of a melting furnace according to a first embodiment of the present invention.
FIG. 2 is a longitudinal sectional front view of the melting furnace illustrated in FIG. 1, taken along the line A-A.
FIG. 3 is an enlarged longitudinal sectional front view for illustrating a main part of an upper portion of the melting furnace according to the first embodiment of the present invention.
FIG. 4 is an enlarged longitudinal sectional front view for illustrating a main part of the upper structure of the melting furnace according to a second embodiment of the present invention.
FIG. 5 is an enlarged longitudinal sectional front view for illustrating a main part of the upper structure of the melting furnace according to a third embodiment of the present invention.
FIG. 6 is an enlarged longitudinal sectional front view for illustrating a main part of the upper structure of the melting furnace according to a fourth embodiment of the present invention.
FIG. 7 is an enlarged longitudinal sectional front view for illustrating a main part of the upper structure of the melting furnace according to a first modification example of the present invention.
FIG. 8 is an enlarged longitudinal sectional front view for illustrating a main part of the upper structure of the melting furnace according to a second modification example of the present invention.
FIG. 9 is an enlarged longitudinal sectional front view for illustrating a main part of the upper structure of the melting furnace according to a third modification example of the present invention.

### Description of Embodiments

Referring to the accompanying drawings, a melting furnace according to embodiments of the present invention and a method of manufacturing a glass article using the melting furnace are described below.

### [First Embodiment]

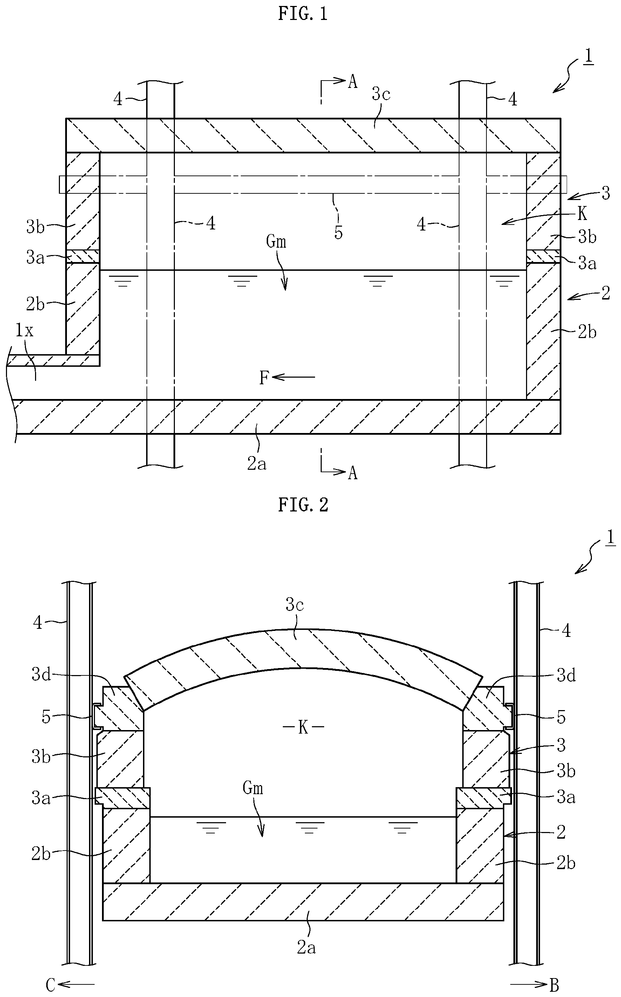

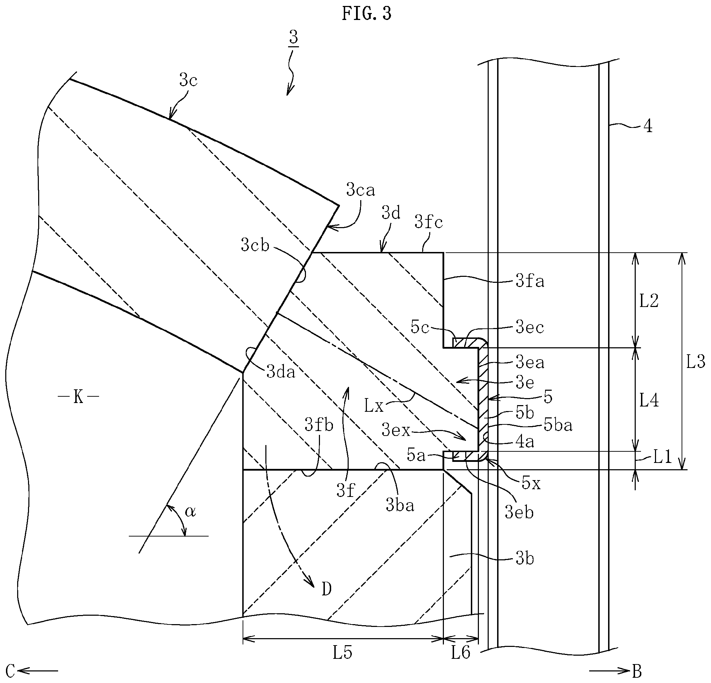

FIG. 1 is a longitudinal sectional side view (sectional view as seen from a side direction) for illustrating a melting furnace 1 according to a first embodiment of the present invention. FIG. 2 is a longitudinal sectional front view (sectional view as seen from a front direction) of the melting furnace 1 illustrated in FIG. 1, taken along the line A-A. As illustrated in FIG. 1 and FIG. 2, the melting furnace 1 broadly comprises a melting tank 2 that generates and stores molten glass Gm, and an upper structure 3 that covers an upper space K above the melting tank 2. In the following description, a side of a starting point of the arrow F in FIG. 1, which indicates a flow direction (direction from a supply side for a glass raw material toward a discharge side for the molten glass, which is to be described later), is referred to as "front side", and a side of an end point of the arrow F is referred to as "rear side". Further, a side in the arrow B direction in FIG. 2 is referred to as "right side", and a side in the arrow C direction is referred to as "left side" (the same holds true for FIG. 3 to FIG. 9).

The melting tank 2 comprises a bottom wall 2a that forms a furnace bottom, and four base side walls 2b that form furnace side portions. The four base side walls 2b are arranged to form a rectangular shape in plan view, and are positioned on a front side, a rear side, a right side, and a left side, respectively. The bottom wall 2a is formed of a plurality of refractory bricks. The base side walls 2b can be formed by laterally arraying refractory blocks that are elongated in a vertical direction, but may also be formed by arraying a plurality of refractory bricks both in the vertical direction and the lateral direction. The bottom wall 2a may comprise an electrode (not shown) configured to heat the molten glass Gm while being immersed in the molten glass Gm. Instead of the electrode in the bottom wall 2a, or in addition to the electrode in the bottom wall 2a, electrodes may be provided in the base side walls 2b on the right and left sides. An outflow channel 1x that discharges the molten glass Gm is formed in the base side wall 2b on the rear side.

The upper structure 3 comprises intermediate bearing bricks 3a respectively arranged on the four base side walls 2b, and upper side walls 3b respectively arranged on those four intermediate bearing bricks 3a. Further, an arched ceiling wall 3c is arranged at an upper end of the upper structure 3. The four intermediate bearing bricks 3a can be formed by laterally arraying a plurality of refractory bricks. Further, each of the four upper side walls 3b can be formed by laterally arraying refractory blocks that are elongated in the vertical direction, but may also be formed by arraying a plurality of refractory bricks both in the vertical direction and the lateral direction. A supply device (not shown) that supplies a glass raw material into the melting furnace 1 is provided on the upper side wall 3b positioned on the front side. The ceiling wall 3c is formed by arraying a plurality of refractory bricks in an arched shape.

A plurality of support columns 4 are arranged on outer sides of the melting tank 2 and the upper structure 3 so as to extend in the vertical direction. In FIG. 1 and FIG. 2, four support columns among those support columns 4 are illustrated. As illustrated in FIG. 2, each pair of those four support columns 4 is arranged on outer sides of both right and left sides of the melting tank 2 and the upper structure 3, and as illustrated in FIG. 1, the support columns 4 in each pair are arranged so as to be opposed to each other. The support columns 4 can be formed of shaped steel, such as H-shaped steel.

As illustrated in FIG. 2, ceiling bearing bricks 3d are respectively arranged on the upper side walls 3b on the right and left sides, and the ceiling wall 3c is supported by each ceiling bearing brick 3d. The ceiling bearing bricks 3d are held by holders 5, respectively. Each holder 5 is supported by the support columns 4.

In detail, each holder 5 is made of metal such as ordinary steel, stainless steel, or heat-resistant steel. Further, as illustrated in FIG. 1, each holder 5 extends along the entire length of the upper structure 3 in the flow direction. Additionally, as illustrated in FIG. 1, each holder 5 is supported by two support columns 4.

With reference to FIG. 2, the plurality of ceiling bearing bricks 3d are arrayed in the flow direction, and the plurality of ceiling bearing bricks 3d are held by corresponding holders 5, respectively. Further, the plurality of ceiling bearing bricks 3d are supported from below by corresponding upper side walls 3b, respectively.

The melting furnace 1 according to this embodiment has identical configurations with a laterally symmetrical relationship on the right and left sides. Accordingly, in the following description, only components on the right side of the melting furnace 1 are described.

FIG. 3 is a longitudinal sectional front view for illustrating a main part of the upper structure of the melting furnace 1 in an enlarged manner. As illustrated in FIG. 3, an end surface 3ca of the ceiling wall 3c is held in abutment against a bearing surface 3da of the ceiling bearing brick 3d. In this case, an abutment surface 3cb of the end surface 3ca, which is held in abutment against the bearing surface 3da, is formed as an inclined surface with the same angle of inclination as that of the bearing surface 3da. An inclination angle α of this abutment surface 3cb relative to the horizontal plane is set to be larger than 45° and equal to or smaller than 70°. The lower limit value of this inclination angle α is preferably larger than 50°, and more preferably larger than 55°. Further, the upper limit value of this inclination angle α is preferably equal to or smaller than 65°.

The ceiling bearing brick 3d comprises a protruding portion 3e protruding toward the support column 4 side. Specifically, the ceiling bearing brick 3d comprises a main body portion 3f, and the protruding portion 3e protruding from a right end surface 3fa of the main body portion 3f toward the support column 4 side. The right end surface 3fa of the main body portion 3f is a vertical surface. Further, the protruding portion 3e has a rectangular sectional shape in the vertical plane containing a straight line parallel to the flow direction F. A right end surface 3ea of the protruding portion 3e is a vertical surface.

A lower end surface 3fb of the main body portion 3f of the ceiling bearing brick 3d is held in abutment against an upper end surface (bearing surface) 3ba of the upper side wall 3b on the right side. This bearing surface 3ba is a horizontal surface. A lower end surface 3eb of the protruding portion 3e of the ceiling bearing brick 3d is positioned above the lower end surface 3fb of the main body portion 3f by a first predetermined dimension L1, but may be positioned at the same height as that of the lower end surface 3fb of the main body portion 3f. An upper end surface 3ec of the protruding portion 3e of the ceiling bearing brick 3d is positioned below an upper end surface 3fc of the main body portion 3f by a second predetermined dimension L2. The second predetermined dimension L2 is longer than the first predetermined dimension L1. In this embodiment, the second predetermined dimension L2 is twice the first predetermined dimension L1 or longer. The upper end surface 3fc of the main body portion 3f is a horizontal surface. A vertical dimension L3 of the main body portion 3f is from 1.1 times to 2.5 times a vertical dimension L4 of the protruding portion 3e. A horizontal dimension L5 of the main body portion 3f is from 1.5 times to 5 times a horizontal dimension L6 of the protruding portion 3e.

The holder 5 comprises a lower support portion 5a that supports the ceiling bearing brick 3d from below, and a lateral support portion 5b that supports the ceiling bearing brick 3d laterally. The lower support portion 5a and the lateral support portion 5b are integrally formed. In this embodiment, the holder 5 further comprises an upper support portion 5c that supports the ceiling bearing brick 3d from above. The upper support portion 5c and the lateral support portion 5b are integrally formed. The lateral support portion 5b is a vertical plate-like portion. Both the upper support portion 5c and the lower support portion 5a are horizontal plate-like portions. In this embodiment, inner surfaces of the upper support portion 5c and the lower support portion 5a are horizontal surfaces, but may be tapered surfaces.

The holder 5 supports only the protruding portion 3e of the ceiling bearing brick 3d. Accordingly, the lower support portion 5a is held in abutment against the lower end surface 3eb of the protruding portion 3e, and the lateral support portion 5b is held in abutment against the right end surface 3ea of the protruding portion 3e. In the illustrated example, the upper support portion 5c is held in abutment against the upper end surface 3ec of the protruding portion 3e, but is not always required to be held in abutment against the upper end surface 3ec of the protruding portion 3e. Both the lower support portion 5a and the upper support portion 5c are spaced apart from the right end surface 3fa of the main body portion 3f of the ceiling bearing brick 3d. The holder 5 does not interfere with the upper side wall 3b.

A right end surface 5ba of the lateral support portion 5b of the holder 5 is held in abutment against a left end surface 4a of the support column 4. In this case, at least during operation of the melting furnace 1, only the right end surface 5ba of the lateral support portion 5b of the holder 5 is held in contact with the left end surface 4a of the support column 4. Accordingly, at this time, the holder 5 is supported by the support column 4 so as to be vertically movable. Meanwhile, at the time when the upper side wall 3b is removed during non-operation of the melting furnace 1, such as during repair or inspection of the melting furnace 1, the holder 5 is fixed to the support column 4.

Under the above-mentioned configuration, the holder 5 is configured so as to bear a force that causes the ceiling bearing brick 3d to rotate downward about a corner portion 3ex of the ceiling bearing brick 3d corresponding to a corner portion 5x between the lower support portion 5a and the lateral support portion 5b of the holder 5, as indicated by the arrow D. Here, the corner portion 3ex of the ceiling bearing brick 3d exists in the protruding portion 3e, and comprises an abutment region between the protruding portion 3e and the lower support portion 5a. In addition, an imaginary straight line Lx that indicates a direction of the force borne by the bearing surface 3da of the ceiling bearing brick 3d from the ceiling wall 3c is configured to intersect the lateral support portion 5b of the holder 5. In the illustrated example, the imaginary straight line Lx intersects a lower part of the lateral support portion 5b, but may intersect any part within a range from a lower end portion to an upper end portion of the lateral support portion 5b.

Next, main operations and effects of the melting furnace 1 having the above-mentioned configuration are described.

In the melting furnace 1, the end surface 3ca (abutment surface 3cb) of the arched ceiling wall 3c is supported by the ceiling bearing brick 3d, and the ceiling bearing brick 3d is held by the holder 5 supported on the support column 4. Thus, an end portion (periphery of the abutment surface 3cb) of the ceiling wall 3c is less prone to damage. Consequently, the arched ceiling wall 3c can be stably supported over a long period of time.

The ceiling wall 3c, the ceiling bearing brick 3d, and the holder 5 are configured such that the holder 5 bears the force that causes the ceiling bearing brick 3d to rotate downward about the corner portion 3ex of the ceiling bearing brick 3d corresponding to the corner portion 5x between the lower support portion 5a and the lateral support portion 5b of the holder 5. Accordingly, even when, for example, during repair or inspection of the melting furnace 1, for example, the upper side wall 3b or base side wall 2b arranged below the ceiling bearing brick 3d is removed, the ceiling bearing brick 3d does not rotate downward about the above-mentioned corner portion 3ex. Moreover, at this point in time, the holder 5 is fixed to the support column 4. Those components can prevent the ceiling bearing brick 3d from rotating downward about the corner portion 3ex of the ceiling bearing brick 3d, and hence the ceiling wall 3c remains supported (clamped) by the ceiling bearing brick 3d, the holder 5, and the support column 4. Thus, collapse of the ceiling wall 3c is prevented. As a result, at the time of restarting the melting furnace 1 after, for example, repair or inspection of the melting furnace 1, the ceiling wall 3c can be reused as it is.

In order that the holder 5 is configured so as to bear the force that causes the ceiling bearing brick 3d to rotate downward about the corner portion 3ex of the ceiling bearing brick 3d, it is only required that the imaginary straight line Lx intersect the lateral support portion 5b of the holder 5. Here, the imaginary straight line Lx indicates the direction of the force borne by the bearing surface 3da of the ceiling bearing brick 3d from the ceiling wall 3c. Thus, when the imaginary straight line Lx intersects the lateral support portion 5b of the holder 5, the holder 5 can bear the force that causes the ceiling bearing brick 3d to rotate downward about the above-mentioned corner portion 3ex. Through adjustment of the direction of the imaginary straight line Lx and the dimensions L1 to L6 of the ceiling bearing brick 3d, the imaginary straight line Lx of the ceiling bearing brick 3d is allowed to intersect the lateral support portion 5b of the holder 5. The direction of the imaginary straight line Lx can be adjusted by changing the inclination angle α.

The holder 5 is supported on the support column 4 so as to be vertically movable, and hence even when the upper side wall 3b, the intermediate bearing brick 3a, the base side wall 2b, and the like, which are arranged below the ceiling bearing brick 3d, expand or contract vertically due to a thermal influence, the holder 5 moves vertically in response thereto, thereby being capable of always holding the ceiling bearing brick 3d appropriately.

The holder 5 is supported on the support column 4 so as to be vertically movable at least during operation of the melting furnace 1, and is fixed to the support column 4 at the time when the upper side wall 3b arranged below the ceiling bearing brick 3d is removed. Accordingly, in any of the cases described above, the ceiling bearing brick 3d can be held appropriately.

The holder 5 comprises a recessed portion that receives the protruding portion 3e of the ceiling bearing brick 3d. This recessed portion of the holder 5 is defined by the upper support portion 5c, the lateral support portion 5b, and the lower support portion 5a. Accordingly, the vertical dimension of the holder 5 can be shortened to achieve reductions in weight and size, and allows the holder 5 to move reliably in response to vertical movement of the ceiling bearing brick 3d.

### [Second Embodiment]

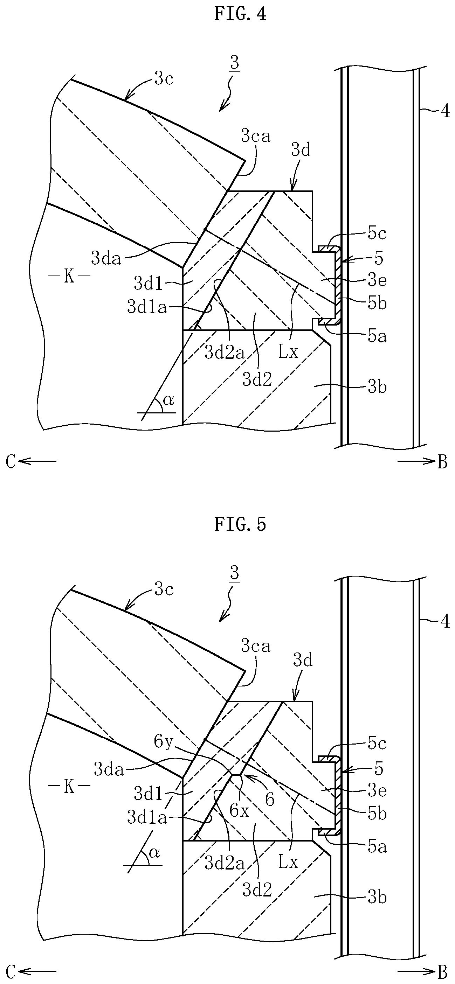

FIG. 4 is a longitudinal sectional front view for illustrating a main part of the upper structure of the melting furnace 1 according to a second embodiment. As illustrated in FIG. 4, the second embodiment is different from the first embodiment described above in that the ceiling bearing brick 3d is divided into a first brick 3d1 and a second brick 3d2. The first brick 3d1 is exposed to an inside of the melting furnace 1 (upper space K), whereas the second brick 3d2 is covered by the first brick 3d1 without being exposed to the inside of the melting furnace 1. Thus, the second brick 3d2 is less susceptible to a thermal influence from the inside of the melting furnace 1 as compared to the first brick 3d1, and along therewith, heat conduction from the second brick 3d2 to the holder 5 and the support column 4 is suppressed. As a result, holding of the ceiling bearing brick 3d by the support column 4 and the holder 5 can be maintained appropriately over a long period of time. Abutment surfaces 3d1a and 3d2a of the first brick 3d1 and the second brick 3d2 are each an inclined surface with the same angle α of inclination in the same direction as in the bearing surface 3da of the ceiling bearing brick 3d. Here, the first brick 3d1 is superior in at least one of heat resistance and corrosion resistance to the second brick 3d2. This can suppress premature deterioration of the first brick 3d1 that is held in abutment against the end surface 3ca of the ceiling wall 3c, thereby being capable of supporting the ceiling wall 3c appropriately over a long period of time. Further, the second brick 3d2 is superior in thermal insulation to the first brick. With this configuration, heat in the melting furnace 1 is less liable to escape to the outside, thereby being capable of improving energy efficiency during operation of the melting furnace 1. In order to satisfy the above-mentioned requirements, for example, it is preferred to use an electroformed brick as the first brick 3d1 and a mullite-based brick as the second brick 3d2. Further, as another example, it is preferred to use an alumina-zirconia brick as the first brick 3d1 and a mullite-based brick as the second brick 3d2. Other configurations, and operations and effects are identical to those of the first embodiment described above. Accordingly, the main components common to both embodiments are denoted by the same reference symbols in FIG. 4, and description thereof is omitted.

### [Third Embodiment]

FIG. 5 is a longitudinal sectional front view for illustrating a main part of the upper structure of the melting furnace 1 according to a third embodiment. As illustrated in FIG. 5, the third embodiment is different from the second embodiment described above in that the respective abutment surfaces 3d1a and 3d2a of the first brick 3d1 and the second brick 3d2 are held in abutment against each other using an anti-slip structure 6. The anti-slip structure 6 is formed by joining together a first step portion 6x, which is formed on the abutment surface 3d1a of the first brick 3d1 so as to protrude toward the holder 5 side, and a second step portion 6y, which is formed on the abutment surface 3d2a of the second brick 3d2 so as to protrude toward the ceiling wall 3c side. With the provision of such an anti-slip structure 6, collapse due to slippage of the first brick 3d1 from the second brick 3d2, and consequent collapse of the ceiling wall 3c can be prevented. Other configurations, and operations and effects are identical to those of the second embodiment described above. Accordingly, the components common to both embodiments are denoted by the same reference symbols in FIG. 5, and description thereof is omitted.

### [Fourth Embodiment]

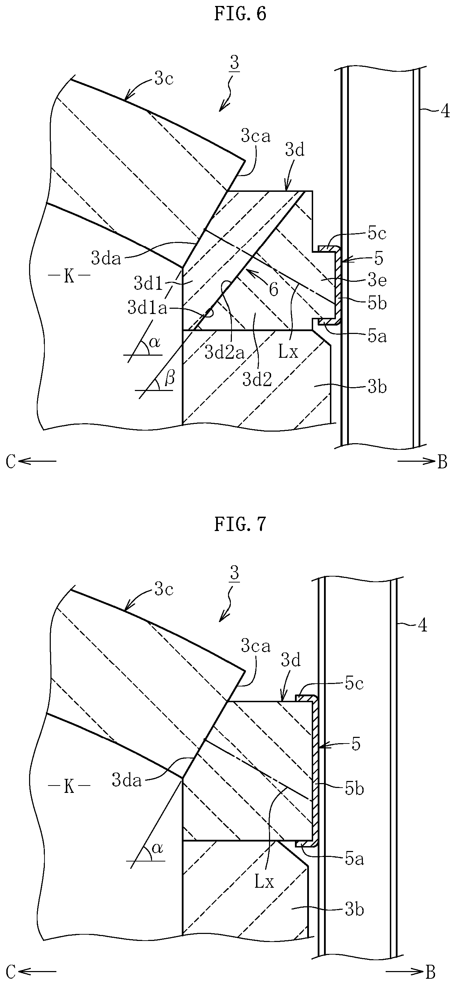

FIG. 6 is a longitudinal sectional front view for illustrating a main part of the upper structure of the melting furnace 1 according to a fourth embodiment. As illustrated in FIG. 6, the fourth embodiment is different from the third embodiment described above in that, in the anti-slip structure 6, an inclination angle β of each of the abutment surfaces 3d1a and 3d2a of the first brick 3d1 and the second brick 3d2 relative to the horizontal plane is made smaller than the above-mentioned inclination angle α. With this anti-slip structure 6, due to a wedge effect, collapse due to slippage of the first brick 3d1 from the second brick 3d2, and consequent collapse of the ceiling wall 3c can be prevented. Other configurations, and operations and effects are identical to those of the third embodiment described above. Accordingly, the components common to both embodiments are denoted by the same reference symbols in FIG. 6, and description thereof is omitted.

Next, a method of manufacturing a glass article according to an embodiment of the present invention is described.

The manufacturing method comprises a molten glass generating step, a transferring step, and a forming step.

The molten glass generating step is a step of generating the molten glass Gm by heating and melting a glass raw material in the melting furnace 1 having the configuration described above.

The transferring step is a step of transferring the molten glass Gm generated in the molten glass generating step from the outflow channel 1x (see FIG. 1) of the melting furnace 1 to a forming device. The transferring step may comprise, as required, a fining step of removing air bubbles from the molten glass Gm in a fining tank provided along a transfer path, a stirring step of stirring the molten glass Gm in a stirring tank, and a condition adjusting step of adjusting the molten glass Gm to a viscosity suitable for forming, or regulating a flow rate of the molten glass Gm.

The forming step is a step of forming a glass article from the molten glass Gm transferred in the transferring step, through use of the forming device. In this forming step, glass articles such as glass sheets, glass tubes, and glass fibers are formed.

The embodiments of the present invention have been described above. However, the embodiments of the present invention are not limited thereto, and various modifications are possible without departing from the gist of the present invention.

For example, in the embodiments described above, the protruding portion 3e is formed on the ceiling bearing brick 3d, and the protruding portion 3e is supported by the holder 5. However, as illustrated in FIG. 7, the ceiling bearing brick 3d may be supported by the holder 5 without forming the protruding portion 3e on the ceiling bearing brick 3d. In this case as well, the ceiling bearing brick 3d may be divided into the first brick 3d1 and the second brick 3d2 in a manner similar to those of the second to fourth embodiments described above.

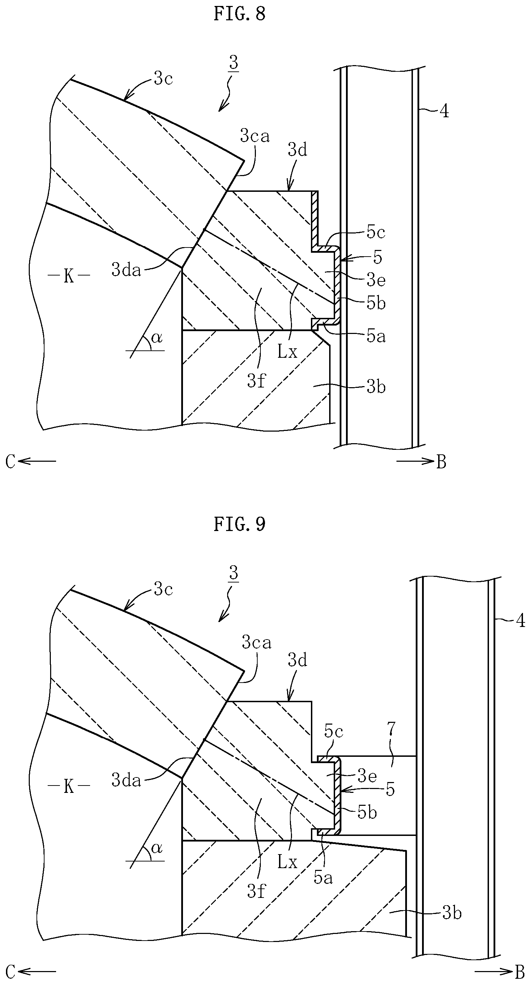

In the embodiments described above, only the protruding portion 3e of the ceiling bearing brick 3d is supported by the holder 5. However, as illustrated in FIG. 8, the main body portion 3f of the ceiling bearing brick 3d may also be supported by the holder 5 in addition to the protruding portion 3e. In this case as well, the ceiling bearing brick 3d may be divided into the first brick 3d1 and the second brick 3d2 in a manner similar to those of the second to fourth embodiments described above.

In the embodiments described above, the lateral support portion 5b of the holder 5 is brought into contact with the support column 4. However, as illustrated in FIG. 9, a coupling member 7 extending toward the ceiling bearing brick 3d side may be mounted on the support column 4, and the holder 5 may be supported by this coupling member 7. In this case as well, the ceiling bearing brick 3d may be divided into the first brick 3d1 and the second brick 3d2 in a manner similar to those of the second to fourth embodiments described above.

In the embodiments described above, the holder 5 comprises the lower support portion 5a, the lateral support portion 5b, and the upper support portion 5c. However, no upper support portion 5c may be provided.

In the embodiments described above, the number of support columns 4 is four. However, the number of support columns 4 may be five or more.

In the embodiments described above, the entire end surface 3ca of the ceiling wall 3c is made coplanar with the abutment surface 3cb. However, a region of the end surface 3ca other than the abutment surface 3cb is not always required to be coplanar with the abutment surface 3cb.

In the embodiments described above, no member is provided to guide the vertical movement of the holder 5. However, a guide rail or the like may be mounted to the support column 4 to guide the vertical movement of the holder 5.

### Reference Signs List

- 1: melting furnace
- 2: melting tank
- 3: upper structure
- 3b: upper side wall
- 3c: ceiling wall
- 3ca: end surface of ceiling wall
- 3cb: abutment surface of ceiling wall
- 3d: ceiling bearing brick
- 3d1: first brick
- 3d1a: abutment surface of first brick
- 3d2: second brick
- 3d2a: abutment surface of second brick
- 3da: bearing surface of ceiling bearing brick
- 3e: protruding portion of ceiling bearing brick
- 3ex: corner portion of ceiling bearing brick
- 4: support column
- 5: holder
- 5a: lower support portion of holder
- 5b: lateral support portion of holder
- 5x: corner portion between lower support portion and lateral support portion
- 6: anti-slip structure
- Gm: molten glass
- Lx: imaginary straight line

## Claims

1. A melting furnace, which is configured to generate molten glass by heating and melting a glass raw material, the melting furnace comprising:
an arched ceiling wall;
a ceiling bearing brick configured to support an end surface of the ceiling wall;
a holder configured to hold the ceiling bearing brick; and
a support column configured to support the holder.

2. The melting furnace according to claim 1,
wherein the holder comprises:
a lower support portion configured to support the ceiling bearing brick from below; and
a lateral support portion configured to support the ceiling bearing brick laterally,
wherein the end surface of the ceiling wall is held in abutment against a bearing surface of the ceiling bearing brick, and an abutment surface of the end surface, which is held in abutment against the bearing surface, is formed as an inclined surface with the same angle of inclination as an angle of inclination of the bearing surface, and
wherein the holder is configured so as to bear a force that causes the ceiling bearing brick to rotate downward about a corner portion of the ceiling bearing brick corresponding to a corner portion between the lower support portion and the lateral support portion.

3. The melting furnace according to claim 1, wherein the holder is supported on the support column so as to be vertically movable.

4. The melting furnace according to any one of claims 1 to 3, wherein the holder is supported on the support column so as to be vertically movable at least during operation of the melting furnace, and is fixed to the support column at the time when a wall portion arranged below the ceiling bearing brick is removed.

5. The melting furnace according to any one of claims 1 to 3,
wherein the ceiling bearing brick comprises:
a first brick on the ceiling wall side; and
a second brick on the holder side, and
wherein the first brick is exposed to an inside of the melting furnace and the second brick is unexposed to the inside of the melting furnace.

6. The melting furnace according to claim 5, wherein the first brick is superior in at least one of heat resistance and corrosion resistance to the second brick.

7. The melting furnace according to claim 5, wherein the second brick is superior in thermal insulation to the first brick.

8. The melting furnace according to claim 5, wherein respective abutment surfaces of the first brick and the second brick are held in abutment against each other using an anti-slip structure.

9. The melting furnace according to any one of claims 1 to 3, wherein the ceiling bearing brick comprises a protruding portion protruding toward the support column side.

10. The melting furnace according to claim 9, wherein the holder comprises a recessed portion configured to receive the protruding portion.

11. A method of manufacturing a glass article, the method comprising a step of generating molten glass using the melting furnace of any one of claims 1 to 3.
